# EUROPEAN PATENT APPLICATION

(11) **EP 1 174 025 A2**
(43) Date of publication of application: **23.01.2002**
(21) Application number: 01202651.4
(22) Date of filing: 10.07.2001
(51) Int. Cl.: A01K 31/19, A01K 1/00, G05D 23/19, A01K 1/02, A01K 1/015

(54) **Heating device**

(30) Priority: 17.07.2000 NL 1015727
(71) Applicant: Nederhoed, Reinder Eric, 8531 RP Lemmer (NL)
(72) Inventor: Nederhoed, Reinder Eric, 8531 RP Lemmer (NL)
(74) Representative: 't Jong, Bastiaan Jacob

(57) **Abstract**

The invention relates to a heating device comprising an electric heat-generating apparatus (3) and a control device (4) which decreases the power consumption by the apparatus over a determined time period from a high value to a low value. The invention further comprises setting means for setting the determined time period to at least several days.

## Description

The invention relates to a heating device particularly intended for keeping young livestock and the like warm.

It is for instance of essential importance in the pig-breeding sector that additional heating is applied for newborn piglets to help these young animals in maintaining their body temperature. The food consumption and associated digestion are still insufficiently developed in the first days after birth, whereby the body temperature is highly dependent on the ambient temperature. If the ambient temperature is low, for instance during the winter season, the animals then cool down too much with all the possible adverse consequences this may entail, such as an increased susceptibility to diseases, reduced growth and even death.

An additional advantage of extra heating is that piglet mortality due to the sow overlaying a piglet is decreased because the piglets are drawn to the heat source.

Extra heating takes place in practice for four to six days after birth. Since this additional heating is usually electric, the cost thereof is considerable.

The invention now has for its object to provide a heating device which is economical in use while still providing sufficient heat.

This objective is achieved according to the invention with a heating device which comprises an electric heat-generating apparatus and a control device which decreases the power consumption by the apparatus over a determined time period from a high value to a low value. It has been found that the heat requirement of the young livestock already decreases quite quickly after birth as the body functions begin to function better. By decreasing the power consumption the heating device according to the invention generates a heat which is well adjusted to the requirement of the young animals.

It has been found in practice that a saving in the order of magnitude of 40% of the electricity consumption is feasible for these heating devices.

In a suitable embodiment of the invention the measure of claim 2 is applied. Since the additional heating requirement will normally decrease over several days, it is advantageous to be able to set to at least several days the time period over which the heating is decreased.

The heating device can be adjusted down to a determined minimum value, although the measure of claim 3 is preferably applied.

Adjusting down can take place in stepwise manner. This can be particularly favourable when use is made of a heating device with a number of separately switchable heating elements. However, for a uniform decrease in the additional heating the measure of claim 4 is preferably applied. The young animals then have no perception of the decrease in the heating and their body functions can adapt well to the decreasing additional heating.

The measure of claim 5 is preferably applied. The personnel taking care of the animals can then see at a glance the value of the additional heating and easily check whether this corresponds to the requirement.

Another embodiment is characterized in claim 6. In this manner it is possible to see immediately whether the heating device is properly set, since the displayed number of days corresponds with the age of the young animals.

The heating device according to the invention preferably takes a displaceable form. It is then provided with connecting means for connection to a mains electricity supply and can be employed at any desired location on the breeding farm.

A suitable embodiment is characterized in claim 8. The control device with its optional setting members is hereby automatically fixed at a readily accessible position.

The invention will be further elucidated with reference to the annexed figures.

Figure 1 shows a farrow stall in a pig-farm provided with a heating device according to the invention.

Figure 2 shows a heating device in another embodiment suitable for additional heating of chicks.

A sow 2 which has given birth to a number of piglets 5 is kept in known manner in farrow stall 1. In the first days following their birth the piglets are kept warm using a heating mat 3. This heating mat 3 is a per se known mat which incorporates an electrical heating element.

Heating mat 3 is connected to a socket 6 of a control device 4 which forms part of the heating device according to the invention.

This control device comprises an electronic circuit with which the power consumption of heating apparatus 3 is decreased from a high value to a low value over a determined period of time.

This circuit is not shown in detail, but can be made easily by a skilled person in the field. It corresponds in principle to a per se known light dimmer which is actuated with a circuit which generates a control voltage which changes, for instance decreases, gradually in a set time.

Control device 4 is provided with a display 7 which displays in suitable manner the percentage of the high value the power consumption at that moment represents. A person supervising the animals can thus see very quickly whether the amount of heat the heating device 3 is generating is appropriate for the piglets 5 in question.

Display 7 can instead also show the period of time which has elapsed since the device was switched on at the high value. In this application this time period will be indicated in days. The number of days shown then corresponds with the age of the piglets 5.

Device 4 further comprises a number of operating keys 8 with which, in a manner which will be further self-evident, the time period over which adjusting down takes place can be set and optionally the high value and the low value between which this control takes place. A key can also have the function of initiating a preset cycle when it is operated.

The control device is connected to the mains electricity supply via a cable 9.

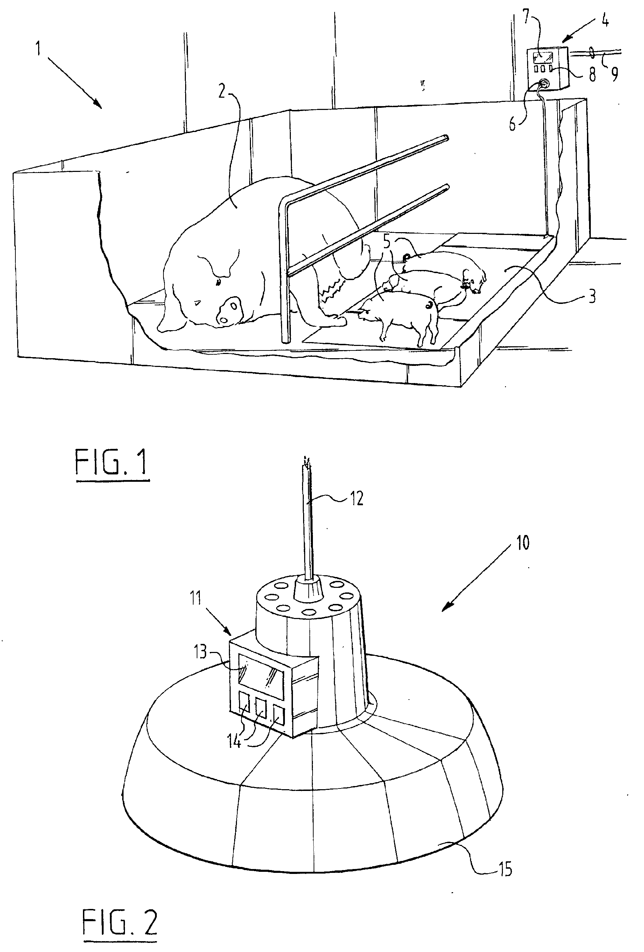

Figure 2 shows another device according to the invention which is for instance particularly suitable for temporary heating of chicks. Heating device 10 here takes the form of a hanging lamp with a lamp housing or reflector 15. The lamp is suspended from the electricity flex 12. Arranged on lamp housing 15 is a control device 11 which functions in a manner consistent with the above description of control device 4. This control device 11 adjusts the power consumption of the heating lamp arranged in lamp housing 15. Device 11 here also comprises a display 13 on which set values and the like can be read, and a number of operating keys 14 for setting control device 11.

## Claims

1. Heating device comprising an electric heat-generating apparatus and a control device which decreases the power consumption by the apparatus over a determined time period from a high value to a low value.

2. Heating device as claimed in claim 1, further comprising setting means for setting the determined time period to at least several days.

3. Heating device as claimed in claim 1, wherein the high value corresponds to the maximum heat generation of the apparatus and the low value corresponds to no heat generation.

4. Heating device as claimed in claim 1, wherein the control device decreases the power consumption in continuously variable manner.

5. Heating device as claimed in any of the foregoing claims, wherein the control device comprises a display member which shows the momentary power consumption as a percentage of the high value of the power consumption.

6. Heating device as claimed in claim 2, wherein the control device comprises a display member which shows the number of days since the beginning of the time period.

7. Heating device as claimed in any of the foregoing claims, wherein it is displaceable and comprises connecting means for connection to a mains electricity supply.

8. Heating device as claimed in claim 7, **characterized in that** the control device is arranged in a plug housing.
